Europäisches Patentamt

(19) European Patent Office

Office européen des brevets

(11) Publication number : **0 332 200 B1**

(12) **EUROPEAN PATENT SPECIFICATION**

(45) Date of publication of patent specification :
03.05.95 Bulletin 95/18

(51) Int. Cl.⁶ : **G11B 21/08,** G11B 21/10,
// G11B5/55

(21) Application number : 89104221.0

(22) Date of filing : 09.03.89

(54) **Servo positioning apparatus.**

(30) Priority : **10.03.88 JP 56979/88**

(43) Date of publication of application :
**13.09.89 Bulletin 89/37**

(45) Publication of the grant of the patent :
**03.05.95 Bulletin 95/18**

(84) Designated Contracting States :
**DE FR GB IT**

(56) References cited :
EP-A- 0 025 606
JP-A-62 269 203
US-A- 2 996 689
PATENT ABSTRACTS OF JAPAN vol. 8, no. 33
(P-254)(1470) 14 February 1984, & JP-A-58
188374 (HITACHI SEISAKUSHO K.K.) 2 Novem-
ber 1983,
IEEE TRANSACTIONS ON MAGNETICS. vol.
MAG14, no. 4, July 1978, NEW YORK US
pages178 - 181; SAMUELS: "BEYOND THE
SECOND ORDER SYSTEM IN TRACK FOL-
LOWING SERVOS"
ELECTRONICS LETTERS. vol. 3, no. 12, De-
cember 1967, ENAGE GB page 553 D.R.WIL-
SON: "ADAPTIVE COMPENSATION OF
MECHANICAL RESONANCES"
PATENT ABSTRACTS OF JAPAN vol. 11, no.
62 (P-551)(2509) 25 February 1987, & JP-A-61
224185 (HITACHI) 4 October 1986,

(73) Proprietor : **FUJITSU LIMITED**
**1015, Kamikodanaka**
**Nakahara-ku**
**Kawasaki-shi Kanagawa 211 (JP)**

(72) Inventor : **Shinohara, Toru c/oFUJITSU**
**LIMITED**
**Patent Department**
**1015 Kamikodanaka**
**Nakahara-ku**
**Kawasaki-shi Kanagawa 211 (JP)**
Inventor : **Sato, Takatoshi c/oFUJITSU**
**LIMITED**
**Patent Department**
**1015 Kamikodanaka**
**Nakahara-ku**
**Kawasaki-shi Kanagawa 211 (JP)**

(74) Representative : **Sunderland, James Harry et**
**al**
**HASELTINE LAKE & CO**
**Hazlitt House**
**28 Southampton Buildings**
**Chancery Lane**
**London WC2A 1AT (GB)**

## Description

This invention relates to a servo positioning apparatus, for example for use in positioning a read/write head of a magnetic recording disk, and more particularly concerns a filter used in a feedback loop of servo control circuitry of the apparatus.

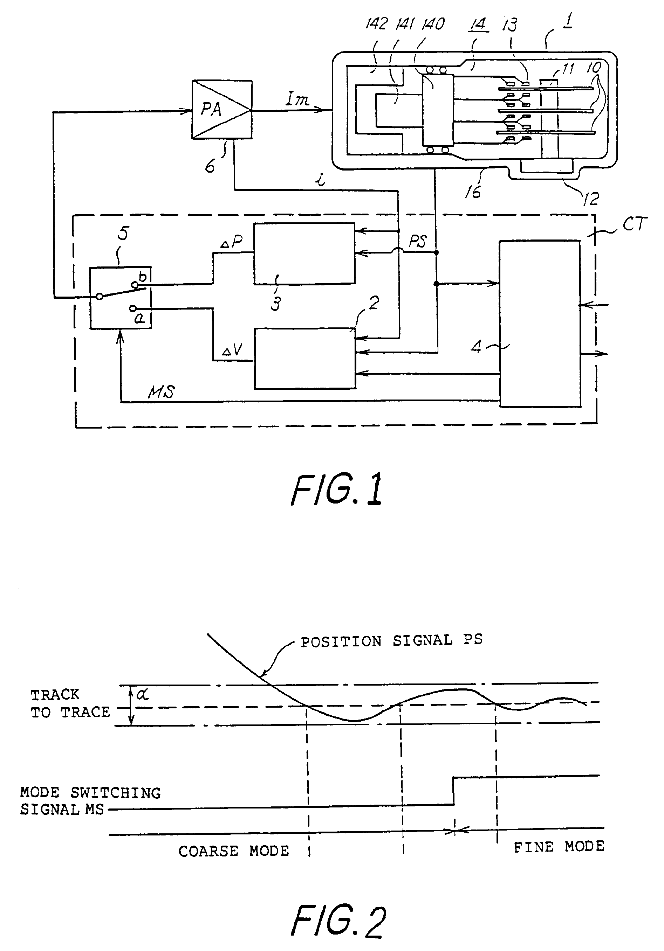

Servo positioning apparatuses have been widely employed for quickly and accurately positioning mechanical elements, such as a magnetic head in a magnetic recording disk apparatus. A typical servo control system of such disk apparatus is illustrated in Fig. 1. Magnetic recording disks 10 are mounted on an axle 11, driven to spin by a spindle motor 12. Magnetic heads 13 are mounted on accessors 140 which are connected to a movable part of a voice coil motor 14. The accessors 140 are moved in an essentially radial direction of the disks 10 by a coil 141 and a magnet 142 of the voice coil motor. Positions or speeds hereinafter referred to relate to positions or speeds in radial directions of the disks 10, i.e. in a seek direction. The above-mentioned parts are installed in a magnetic disk unit 1 enclosed in a disk enclosure 16. The disk unit 1 is mounted in a main chassis of a magnetic disk apparatus but is detachable therefrom, for servicing, etc.

A coarse controller (i.e. a velocity control circuit) 2 generates a velocity error signal $\Delta V$ depending on a position signal PS obtained from a servo signal generated from a magnetic head 13. Details of the controller 2 are described below. The position signal PS indicates radial position (of the magnetic head) relative to an adjacent track (on a disk 10), and is generally designed to be zero when the head is positioned on a centre line of a track to be traced. A fine controller (i.e. a position controller) 3 generates a position error signal $\Delta P$ from the phase-compensated position signal PS processed using proportional control (P), derivative control (D) and integral control (I). A controller 4 composed of a microprocessor calculates a number of tracks to be jumped, according to an instruction from an upper processor unit, then switches coarse/fine modes by outputting a mode switching signal MS to a switch 5, and outputs instructions to the coarse controller 2 and fine controller 3, each to drive the voice coil motor 14. Thus, the coarse controller 2, the fine controller 3, the controller 4 and the switch 5 constitute a servo controller CT.

Now, when the coarse mode is instructed from the controller 4, the switch 5 connects one terminal "a" to the output of the servo controller CT and accordingly a driving current proportional to the velocity error signal $\Delta V$ is supplied from a power amplifier 6 to the voice coil motor 14. Thus, the magnetic head 13 is moved to a destination track in accordance with a predetermined velocity schedule depending on a difference between a target velocity $V_c$ and an actual velocity $V_r$ of the head 13 obtained from the position signal PS. As shown in Fig. 2, on detecting that the head has reached a destination track according to the position signal PS, the controller 4 switches the switch 5 to connect a terminal "b" to the output of the servo controller CT. In Fig. 2, $\alpha$ indicates the width of a track to be traced, and MS indicates a signal for switching switch 5.

With terminal "b" connected to the output of the servo controller CT, the fine controller 3 delivers the position error signal $\Delta P$ to the amplifier 6. Accordingly, a driving current $I_m$ proportional to the position error signal $\Delta P$ (when terminal "a" was connected $I_m$ was proportional the velocity error signal $\Delta V$) is supplied from the power amplifier 6 to the voice coil motor 14. Thus, the head is controlled to trace or move to a destination track.

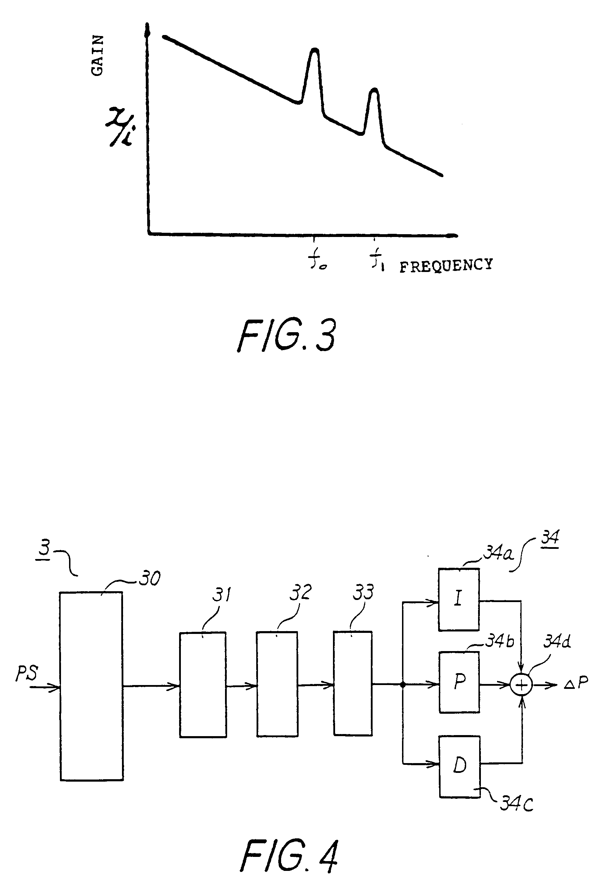

However, as illustrated in Fig. 3, the moving parts of the apparatus naturally suffer from mechanical resonance. Therefore, a notch filter 32 has been widely employed in the servo loop (i.e. feedback loop) of the servo positioning apparatus, in order to damp undesirable oscillation of the heads 13 caused by the mechanical resonance.

For example, JP-A-61-224185 discloses a head positioning mechanism having a resonant frequency, a controller for providing a servo signal derived from a position signal representing the position of the head relative to the track being traced, which controller has a notch filter with a notch frequency substantially equal to the resonant frequency.

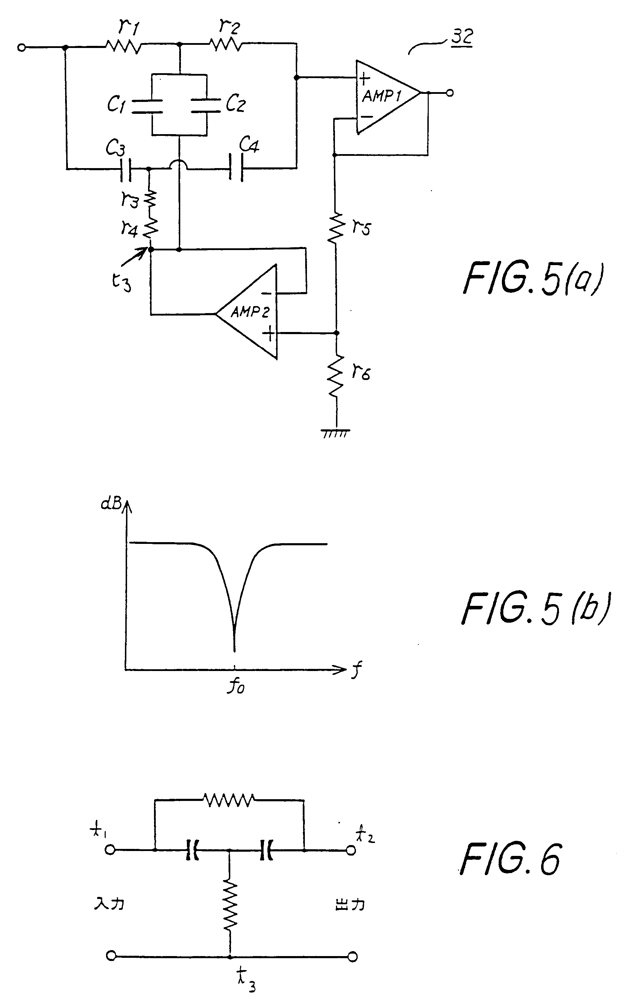

Details of the fine controller 3 of Fig. 1 are indicated in Fig. 4 and Figs. 5(a) and 5(b). A fine position amplifier 30 generates from the position signal PS a signal which becomes zero volts when the head is located at the centre of a track, and takes positive or negative values proportional to deviations of the head from the centre of the track to one side or the other. A clamp circuit 31 generates a clamped position signal, which is a modification of the signal output from the fine position amplifier 30 which saturates at predetermined positive and negative levels. A notch filter 32 has an attenuation characteristic as shown in Fig. 5(b), such that attenuation is maximum at the frequency $f_0$ of a mechanical resonance. A second filter 33 attenuates high-frequency gain of the servo loop in order to attain a stable servo operation. A phase compensation circuit 34 is also provided for attaining a stable servo operation. An integrator circuit 34a integrates an output from the second filter 33 for integral control, an amplifier 34b amplifies the output from the second filter 33 for proportional control, and a differentiator circuit 34c differentiates the output from the second filter 33 for derivative control. An adder circuit 34d adds the outputs from the integrator circuit 34a, the amplifier 34b and the differentiator circuit 34c, then outputs the position error signal $\Delta P$ to the switch 5.

The notch filter 32 is typically composed of a twin T-type filter as shown in Fig. 5(a). The notch filter of JP-A-61-224185 is similar to that of Fig. 5(a). A parallel connection of capacitors $C_1$ and $C_2$ connected to a connecting point of resistors $r_1$ and $r_2$ forms a first T-type network. A series connection of resistors $r_3$ and $r_4$ connected to a connecting point of capacitors $C_3$ and $C_4$ forms a second T-type network. These two T-type networks are connected in parallel to form a twin T-type filter. An output from resistor $r_2$ and capacitor $C_4$ is input to an amplifier AMP1 having a unity gain. An output of amplifier AMP1 is divided by resistors $r_5$ and $r_6$, and the divided output level is input to another amplifier AMP2 having a unity gain. Output of the second amplifier AMP2 is fed to a return terminal $t_3$, which is the connecting point of capacitors $C_1$, $C_2$ and resistor $r_4$.

A notch frequency $f_0$ of this filter is given by the following formula, where the resistors $r_1$ to $r_4$, have equal resistance values R and the capacitors $C_1$ to $C_4$ have equal capacitance values C.

$$f_0 = \frac{1}{2\pi CR} \quad (1)$$

Accordingly, the notch frequency $f_0$ can be adjusted by varying the resistance value R or the capacitance value C.

A problem with the twin T-type filter is in that all of the four resistors $r_1$ to $r_4$ or all of the four capacitors $C_1$ to $C_4$ must be replaced according to the formula (1) for adjusting the resonant frequency while keeping the attenuation unchanged, when the disk unit 1 is replaced for servicing, etc.

US-A-2 996 689 discloses a bridged twin T-type notch filter in which resistors are provided by potentiometers which are ganged together and can be varied simultaneously in value to adjust the notch frequency whilst attenuation remains unchanged.

Another notch filter which may be employed in the servo control circuit is a bridged T-type filter as shown in Fig. 6. Problems with this type of filter are that the available attenuation is not adequate, for example -12 dB, and three or four capacitors or resistors must be replaced for adjusting the resonant frequency while keeping the attenuation unchanged.

Disk units do not always have the same resonant frequency even if they are of the same design, and furthermore if the design is changed, for reasons of improvement, etc., the resonant frequency consequently changes. The notch filter is generally mounted on a printed circuit board, which is installed in a main chassis on which the disk apparatus is installed. The exchange of the three or four circuit elements is a time-consuming job requiring a precise instrument. Exchange of the printed circuit board is of course expensive. In any event, costs of production and servicing are considerable. In order to avoid this problem, the notch filter may be mounted on the replaceable (detachable) disk unit 1, in which the notch frequency is tuned at the factory, as disclosed in Japanese Unexamined Patent Publication Tokukai Sho 58-188374 (JP-A-58-188374). However, a problem still remains in that frequency adjustment is a troublesome job even in a factory production line.

According to the present invention there is provided servo positioning apparatus, comprising:-
a mechanism for positioning an object, the mechanism having a resonant frequency; and
a controller for providing a servo signal derived from a position signal representing position of the object, for example relative to a track to be traced by the object, said controller including a notch filter having a notch frequency substantially equal to said resonant frequency;
characterised in that:-
said notch filter comprises a network composed of the following elements:-
first to third capacitors connected in a series circuit bridging an input terminal of said network and an output terminal of said network;
a first resistor connected between a third terminal of said network and an interconnection point of said first and second capacitors;
a second resistor connected between said third terminal and an interconnection point of said second and third capacitors; and
a third resistor connected in parallel to said series circuit of said first to third capacitors.

According to the present invention there is also provided such apparatus wherein said mechanism for positioning the object is installed in a unit detachable from other portions of the apparatus, and wherein an element for tuning said notch frequency is separately installed in said unit.

According to the present invention there is further provided servo positioning apparatus, comprising:-
a mechanism for positioning an object, said mechanism being installed in a disk unit, said mechanism having a resonant frequency; and
a controller for providing a servo signal derived from a position signal representing position of the object relative to a track to be traced by the object, said controller including a bridged serial T-type notch filter having a notch frequency substantially equal to said resonant frequency;
characterised in that:-
said filter comprises a network composed of:-
a serial circuit of first to third capacitors connecting an input terminal of said network and an output terminal of said network;
a first resistor connected in parallel to said serial circuit of said first to third capacitors; and
second and third resistors serially connected between a third terminal of said network and an interconnection point of said first and second capacitors, an end of said third resistor being connected to said third terminal; and

fourth and fifth resistors serially connected between said third terminal and an interconnection point of said second and third capacitors, an end of said fifth resistor being connected to said third terminal, said third and fifth resistor being separately installed in said disk unit.

An embodiment of the present invention can provide an efficiently adjustable filter used in a servo positioning apparatus, applicable for example to positioning of a read/write head of a magnetic recording disk.

An embodiment of the present invention can provide for an exchangeable disk unit structure which is economical in terms of its servicing characteristics.

According to an embodiment of the present invention a notch filter used in a servo loop for dampening a mechanical resonance of moving parts of the mechanism to be servo controlled, has a CR (capacitor resistor) network including a serial connection of first to third capacitors having approximately equal capacitance values connected between an input terminal of the filter and an output terminal of the CR network; a first resistor connected between a return terminal of the CR network and an interconnection of the first and second capacitors; a second resistor connected between the return terminal and an interconnection of the second and third capacitors; and a third resistor connected in parallel to the three serial capacitors.

The notch frequency of the filter is adjusted by varying the resistance values of only the first and second resistors. The first and second resistors may be composed of fixed and/or potentiometer-type variable resistor(s) whose variable terminal then becomes the return terminal.

An output from the CR network may be divided to be fed back to the return terminal. The resistor(s) for adjusting the notch frequency may be separately installed in a detachable disk unit including the mechanism to be servo controlled.

Thus, frequency adjustment is efficient, the detachable disk unit is less expensive and, furthermore, the detachable disk unit may be prepared to have an individual notch frequency tuned to the resonant frequency of the individual mechanism beforehand in the factory.

Reference is made, by way of example, to the accompanying drawings, in which:-

Fig. 1 is a schematic block diagram of a servo positioning apparatus used in a conventional recording disk system,

Fig. 2 is a time chart schematically illustrating a position signal, in the vicinity of a destination track to be traced, and timing for switching a control mode,

Fig. 3 is a graph illustrating servo loop gain versus frequency, before compensation of frequency characteristics of the loop,

Fig. 4 is a schematic block diagram of a fine controller used in servo positioning apparatus,

Fig. 5(a) is a schematic circuit diagram of a twin T-type notch filter used in previously proposed servo positioning apparatus,

Fig. 5(b) is a graph illustrating attenuation characteristics of the notch filter of Fig. 5(a),

Fig. 6 is a schematic circuit diagram of a previously proposed bridged T-type notch filter used in servo positioning apparatus,

Fig. 7 is a schematic block diagram of servo control apparatus which can be employed in accordance with an embodiment of the present invention,

Fig. 8 is a schematic diagram of a bridged serial T-type notch filter according to an embodiment of the present invention,

Fig. 9(a) is a graph illustrating frequency characteristics of the filter of Fig. 8,

Fig. 9(b) is a graph illustrating the effect of the variation of a resistance value on the notch frequency of a filter in accordance with an embodiment of the present invention,

Fig. 10 is a graph illustrating the effect of varying feedback ratio on the frequency characteristics of a filter in accordance with an embodiment of the present invention,

Figs. 11(a) and 11(b) are graphs which illustrate phase characteristics of notch filters,

Figs. 12(a) and 12(b) are schematic circuit diagrams of notch filters in accordance with respective further embodiments of the present invention, and

Fig. 13 is a schematic circuit diagram of a notch filter in accordance with another embodiment of the present invention.

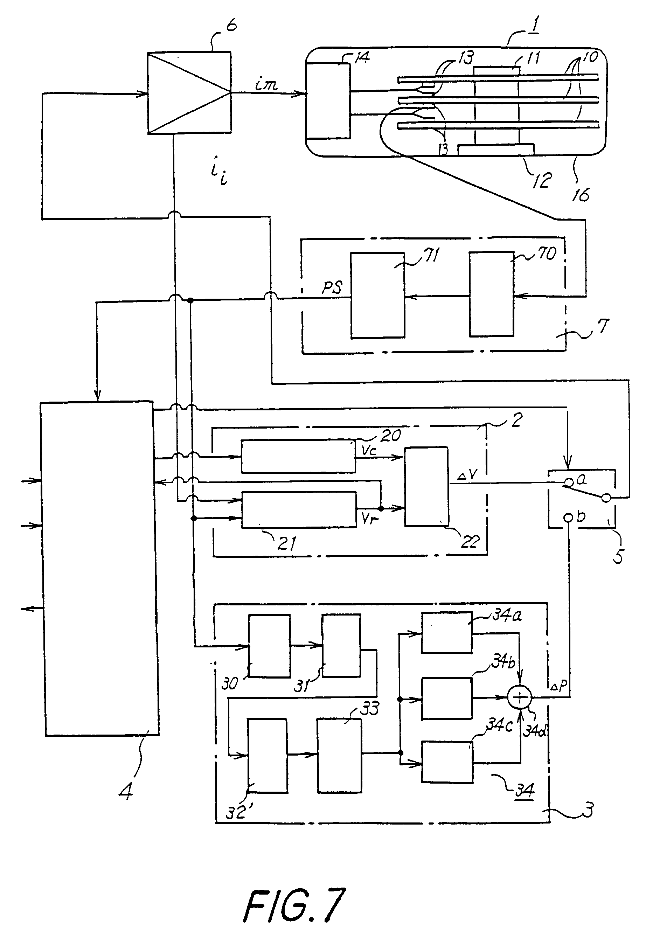

Referring to the block diagram of Fig. 7, an apparatus for servo positioning read/write heads of a recording disk system, in which an embodiment of the present invention can be applied, is representatively described hereinafter.

Magnetic recording disks 10 are mounted on an axle 11 driven to spin by a spindle motor 12. Magnetic heads 13 are connected to a coil of a voice coil motor 14. The heads 13 are moved in an essentially radial direction of the disks 10 by the voice coil motor 14.

A position signal generator 7 generates a position signal PS depending on a servo signal SVS produced by one of the heads 13 which reads servo signals of the track the head is currently on and its adjacent track both recorded on a servo surface (typically the lower surface of the second disk). The position signal generator 7 includes an AGC (automatic gain control) amplifier 70, which keeps the servo signal SVS at an essentially constant amplitude; and a position signal detector 71, which decodes the AGC-controlled servo signal SVS to provide a position signal PS (as shown in Fig. 2).

A target velocity generator 20 in the velocity controller 2 generates a target velocity $V_c$, according to a predetermined schedule that typically consists of a constant acceleration section, a constant velocity section and a constant deceleration section, depending on the number of tracks to be jumped, the number being instructed from a controller 4. A velocity signal generator 21 generates a velocity signal $V_r$, which indicates proportionally the actual velocity of the head depending on the position signal PS and an indication current $i_i$, which indicates proportionally the amplitude of a driving current $I_m$ of voice coil motor 14 supplied from the power amplifier 6. An error signal generator 22 generates and supplies a velocity error $\Delta V$ depending on the difference between the target velocity $V_c$ and the velocity signal $V_r$ to switch 5. Accordingly, the head 13 driven by the voice coil motor 14 moves with thus given velocity to the destination track.

The controller 4 is composed of a microprocessor to receive a seek instruction and a destination track number given from an upper (higher level) processing device and outputs instructions for the seek control. Into the controller 4, the position signal PS from the position signal detector 71 and the velocity signal $V_r$ from the velocity signal generator 21 are input as well, then the controller 4 calculates a number of tracks to be jumped, for output to the target velocity generator 20. On arrival of the head 13 at the destination track as shown in Fig. 2, the controller 4 detects this fact from the position signal PS and outputs a coarse/fine switching signal MS to the switch 5, to change the switch from its "a" position to its "b" position, i.e. from the coarse controller 2 to the fine controller 3, in order to trace the track the head is now on (even when the track is eccentrically rotating). The controller 4 has also a function of outputting a seek end signal to the upper (higher level) processing device when a seek operation is finished.

A fine controller 3 is composed of: a fine position amplifier 30 which generates, in dependence upon the position signal PS, a signal which has a neutral voltage (e.g. zero volts) when the head is located at the centre of a track, and becomes more positive or more negative in proportion to deviation from the centre of the track to one side or the other; a clamp circuit 31, which generates a clamped position signal, this being a modification of the signal output from the fine position amplifier 30 such that it saturates at predetermined positive and negative levels; a notch filter 32, which has a notch frequency equal to a mechanical resonant frequency $f_0$ of moving parts of the mechanism to be servo controlled, i.e. the voice coil motor 14, the heads 13 and accessor members connecting the heads to the voice coil motor 14, so that undesirable oscillation of the heads 13 is prevented. Details of the notch filter 32 are described below. A second filter 33, composed of a low pass filter, is connected to the output of the notch filter 32 in order to attenuate high-frequency gain of the servo loop so as to remove noise and to achieve a stable servo operation. A phase compensation circuit 34 is connected to the output of the second filter 33 so as to attain a stable quality servo operation. The phase compensation circuit 34 includes: an integrator circuit 34a for integrating an output from the second filter 33 for integral control; an amplifier 34b for amplifying the output from the second filter 33 for proportional control; and a differentiator circuit 34c for differentiating the output from the second filter 33 for derivative control. An adder circuit 34d adds outputs from the integrator circuit 34a, the amplifier 34b and the differentiator circuit 34c, then outputs the thus derived position error signal $\Delta P$ to the switch 5.

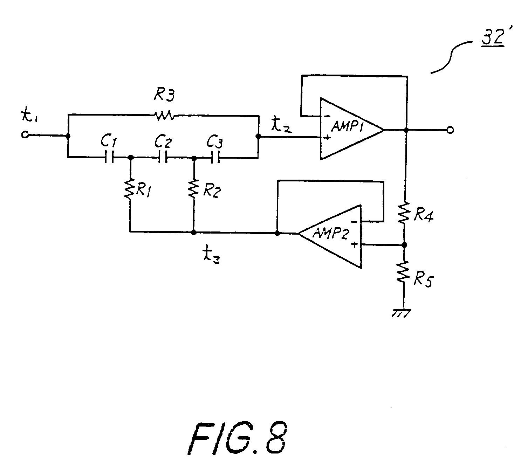

In Fig. 8, there is shown a practical schematic circuit diagram of a bridged serial T-type filter of an embodiment of the present invention, to be used as the notch filter 32' in Fig. 7. A serial connection of capacitors $C_1$, $C_2$ and $C_3$ is connected between an input terminal $t_1$ and an output terminal $t_2$ of a CR (capacitor, resistor) network. A first resistor $R_1$ connects a return terminal $t_3$ and a connection point of the capacitors $C_1$ and $C_2$. A second resistor $R_2$ connects the return terminal $t_3$ and a connection point of the capacitors $C_2$ and $C_3$. Thus, they compose a serial T formation. A third resistor $R_3$ connects, i.e. bridges, the ends of the serial connection of the capacitors $C_1$ to $C_3$. An output from the output terminal $t_2$ of the CR network is input to an amplifier AMP1 having generally a unity gain. An output of amplifier AMP1 having generally a unity gain. An output of amplifier AMP1 is divided by resistors $R_4$ and $R_5$, and the divided output level is input to a second amplifier AMP2 having generally a unity gain. The first amplifier AMP1 isolates the CR network from effects of input impedance of the next stage, i.e. the second filter 33, and the divider resistors $R_4$ and $R_5$. The output of the second amplifier AMP2 is connected to the return terminal $t_3$.

In this bridged serial T-type filter, a notch frequency $f_0$ at which a gain of the filter is significantly decreased, is given by the following equation, where

$$C_1 = C_2 = C_3 = C$$
$$R_3 = 6 (R_1 + R_2) \quad (2)$$
$$f_0 = \frac{1}{2 \pi C \sqrt{3 R_1 R_2}} \quad (3)$$

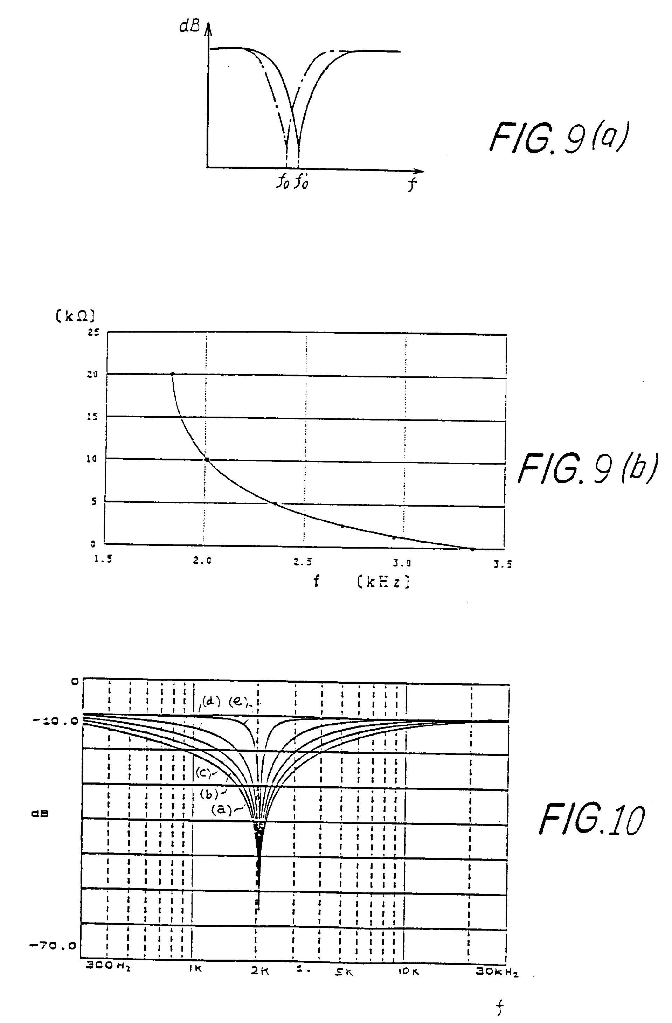

Accordingly, the notch frequency can be shifted as shown in Fig. 9(a) from $f_0$ to $f_0'$ by changing the resistance values of $R_1$ and $R_2$. In a typical case where the capacitance value $C_1 = C_2 = C_3 = 2200$ pF, resistance value $R_3 = 287$ k ohm and a partial resistance assigned to $R_1$ and $R_2$ is varied while keeping the total resistance value $R_1$ and $R_2 = 47.7$ k ohm, the effect of the varied resistance on the notch frequency is shown in Fig. 9(b). As seen in Fig. 9(b), a notch frequency variation of more than 1 kHz is achieved, which is adequate to cover variation of the resonant frequencies (in the servo system).

The division ratio of the output of the amplifier AMP1 by the resistors $R_4$ and $R_5$ determines the feedback ration $(R_4/R_4+R_5)$ to the network. The effects of the feedback ratio on band width of the notch frequency $f_0$ are shown in Fig. 10, where the values of the elements in the CR network are the same as those mentioned above.

In Fig. 10 the curves (a) to (e) correspond to feedback ratios 0.15, 0.35, 0.55, 0.75 and 0.95, respectively. As seen in this Figure, the larger the feedback ratio the narrower the band width of the filter, whilst attenuation at the notch frequency is kept essentially constant.

Attenuation at the notch frequency can also be kept essentially unvaried when notch frequency is varied corresponding to the case of Fig. 9(b). Then, attenuation at the notch frequency can be as much as or more than 40 dB, which is adequate for dampening mechanical resonance in the feedback system, even if some drift of frequency takes place. The bridged T-type filter shown in Fig. 6 achieves only -12 dB at most.

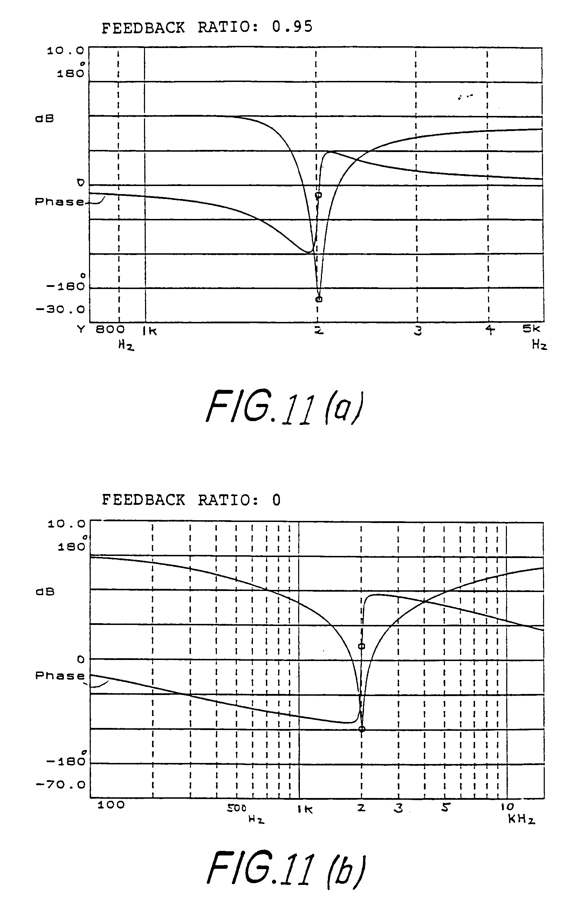

Phase rotation by the notch filter is a factor to be controlled in the servo control system, particularly at a lower frequency band, typically from 300 to 800 Hz, at which the servo mechanism is driven most often. If phase rotation is excessive in this band the stability of the servo system is deteriorated. Phase characteristics of the notch filter having the above-mentioned element values and a feedback ratio of 0.95 are shown in Fig. 11(a). As seen in these characteristics, the amount of phase rotation at 800 Hz is 10° which is fully satisfactory. For comparison, a similar filter having feedback ratio of zero, i.e. the return terminal $t_3$ is grounded, is shown in Fig. 11(b). The bridged T-type filter of Fig. 6 can have a problem with phase rotation, as can the filter of Fig. 5(a).

One practical procedure for adjusting the notch frequency is as follows. Before adjusting the notch frequency of the notch filter 32, mechanical resonant frequency of the mechanism to be servo controlled is first measured. With switch 5 connected to terminal "b", a low-level test signal having frequencies swept from 300 Hz to approximately 5.0 kHz is input to the terminal "b", i.e. an input terminal of the power amplifier 6, from a signal generator (not shown in the Figure). Then, an output level "x" from the fine position amplifier 30 and the current indication "i" which is proportional to the voice coil current $I_m$, and accordingly indicates the output level of the voice coil current to the power amplifier 6, are measured for the varied input frequencies. Gain of the power amplifier 6 and the movable parts of the mechanism, i.e. x/i, is then calculated. The gain versus frequency curve is plotted as shown in Fig. 3. Location of the peak of the gain curve represents the mechanical resonant frequency $f_0$. Next, the thus obtained resonant frequency $f_0$ is input into equation (3) to obtain resistance values for $R_1$ and $R_2$. The resistors $R_1$ and $R_2$ are adjusted to have thus calculated resistance values.

Replacement of only two resistors (according to equation (3)) instead of four elements of the previously proposed twin T-type filter or three elements of the previously proposed bridge T-type filter, considerably reduces working time required for the frequency adjustment of the filter at production or during servicing, which requires exchange of the disk unit.

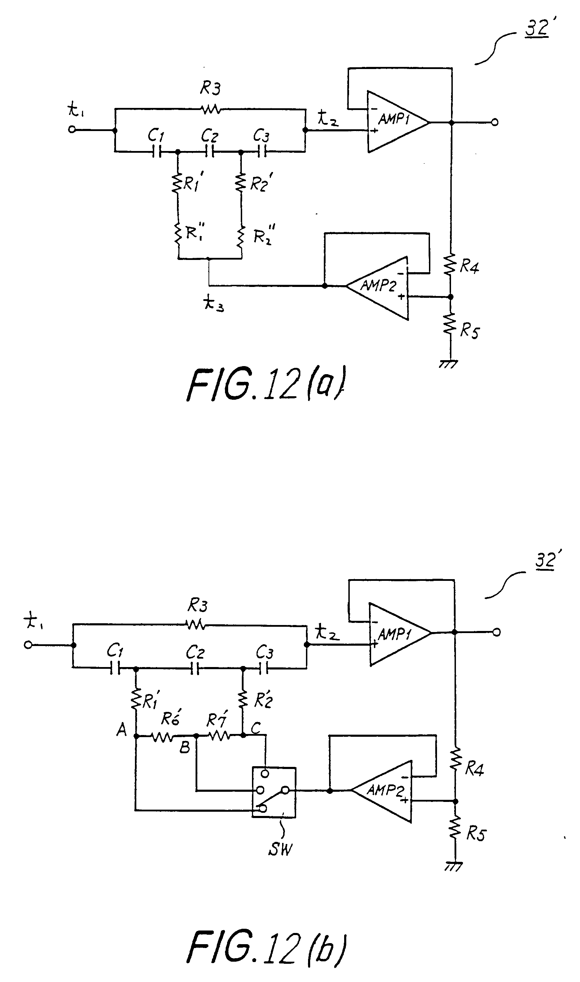

Referring to Figs. 12(a) and 12(b), further embodiments of the present invention will be described. In these embodiments the first and second resistors $R_1$ and $R_2$ consist of a resistor $R_1'$ plus an additional resistor $R_1''$ (Fig. 12(a)) or an additional resistor $R_6'$ (Fig. 12(b)); and a resistor $R_2'$ plus an additional resistor $R_2''$ (Fig. 12(a)) or $R_7'$ (Fig. 12(b)), respectively. The sum of the resistance values of the resistors $R_1'$, $R_2'$, $R_1''$ (or $R_5'$) and $R_2''$ (or $R_7'$) are kept essentially to one-sixth of the resistance value $R_3$ to satisfy equation (2). Adjustment of the notch frequency $f_0$ is carried out by changing the resistance values of $R_1''$ and/or $R_2''$ for the configuration of Fig. 12(a), or simply selecting (by means of a switch SW) one of connection points A, B or C (each at an interconnecting point of resistors $R_1'$, $R_6'$, $R_7'$ and $R_2'$) as the return terminal $t_3$ to which the feedback from amplifier AMP2 is connected for the configuration of Fig. 12(b). Thus, the resistance values of the first and second resistor $R_1$ and $R_2$ of equation (3) are varied.

Assuming $R_2' = R_1' + R_6' + R_7'$ for the configuration of Fig. 12(b), and if the switch selects connection point "C", then

$$R_1 = R_1' + R_6' + R_7'$$
$$R_2 = R_2' \quad (4)$$

Accordingly, the notch frequency becomes the lowest.

If the switch selects connection point "B", then

$$R_1 = R_1' + R_5'$$
$$R_2 = R_2' + R_7' \quad (5)$$

Accordingly, the notch frequency comes higher than that of condition (4).

If the switch selects connection point "A", then

$$R_1 = R_1'$$
$$R_2 = R_2' + R_6' + R_7' \quad (6)$$

Accordingly, the notch frequency becomes the highest.

Thus, notch frequency can be selected to tune to three different frequencies to meet the resonant frequency $f_0$ of the mechanism of the magnetic disk unit 1. The number of taps or connection point for additional resistors can be arbitrarily chosen depending on design requirements; that is, two taps between resistors $R_1$ and $R_2'$ allow selection of two frequencies, whilst four taps allow selection of four frequencies as well.

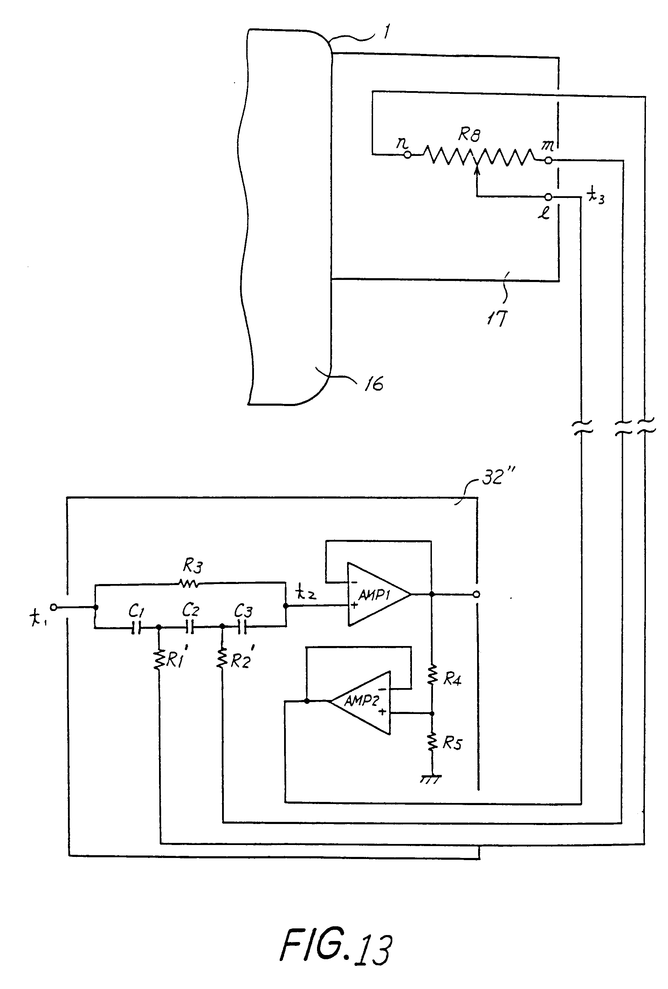

The two resistors $R_1''$ and $R_2''$ used in Fig. 12(a) may be replaced with a potentiometer-type variable resistor $R_8$ as shown in Fig. 13. Two fixed ends, denoted by "m" and "n", of the variable resistor $R_8$ are connected to resistors $R_2'$ and $R_1'$, respectively. The sum of resistance values of resistors $R_1'$, $R_2'$ and fixed part of $R_8$ is essentially one-sixth of that of resistor $R_3$. A variable terminal "l" of the variable resistor $R_8$ corresponds to the return terminal $t_3$ to which the output of the second amplifier AMP2 is connected. Accordingly, frequency adjustment can be effected precisely and efficiently by observing frequency characteristics of the filter on a spectrum analyser display whilst the input frequency to the filter is swept, or by calculation from equation (3).

As mentioned above, even if disk units are produced to the same design, individual units will have slightly different resonant frequencies from each other. Therefore, frequency adjusting elements, such as two resistors $R_1''$ and $R_2''$ used in Fig. 12(a), the resistors $R_8'$, $R_7$ and their switch SW used in Fig. 12(B), or the potentiometer-type variable resistor $R_8$ may be installed in a circuit board 17 mounted on a disk unit 1, separately from the below-described main portion of the filter, as illustrated in Fig. 13. Fig. 13 illustrates representatively the case where the variable resistor $R_8$ is employed. In the disk unit 1, the magnetic recording disks 10, the spindle motor 12, the read/write head 13 and the voice coil motor to drive the heads 13 are also installed. The disk unit 1 is detachable from the main chassis of the magnetic disk drive apparatus, for facilitating replacement of recorded disks or servicing of a defective unit. The main portion of the notch filter 32, including the elements which require no adjustment, such as capacitors $C_1$ to $C_3$, resistors $R_1'$, $R_2'$ and $R_3$, the amplifiers AMP1 and 2, are installed on a printed circuit board (which is given reference numeral 32'' in Fig. 13) in a main chassis of the magnetic disk drive apparatus. In the main chassis of the magnetic disk drive apparatus, the resistance values and the capacitance values of the filter can be kept essentially same and constant for each product. Therefore, in a factory where a new disk unit is completed, each one of the completed units 1 is first mounted in the main chassis of the magnetic recording apparatus, as an adjusting jig. Next, the mechanical resonance characteristics of the unit is measured according, for example, to the method described above. Then, the resistors $R_1''$ and $R_2'$ or the variable resistor $R_8$ installed in the unit 1 is adjusted so that the notch frequency is tuned to the mechanical resonant frequency of this mounted unit according to the above-described method. Next, the disk unit 1 is removed from the main chassis, so as to be a stock for shipment. When a defective disk unit is to be replaced with a new unit in field, i.e. for servicing, the new unit needs no more frequency adjustment, resulting in efficient servicing.

Furthermore, the electronic circuit installed in the disk unit 1, which must be replaced upon servicing, can be made less expensive, because the main portion of the filter does not have to be exchanged. Therefore, servicing costs can be reduced both in terms of time required and hardware cost.

Although in the above description relating to embodiments of the invention it is indicated that a single notch filter is employed in the fine controller 3, a mechanism (servo system) generally has two or more resonances. In this case, the notch filter is typically tuned to the major one of the resonances. Alternatively, there may be provided a plurality of notch filters.

Although in the above description relating to embodiments of the invention it is indicated that a first amplifier AMP1 is provided to isolate the CR network from the effects of the dividing resistors and the input impedance of the second filter 33, the first amplifier AMP1 may be omitted, as long as the effects of the dividing resistors and the input impedance of the second filter 33 are negligible or within a degree adjustable by the CR network.

Although in the above description relating to embodiments of the invention it is indicated that a second amplifier AMP2 is provided to isolate the network from the effects of the dividing resistors, the second amplifier AMP2 may be omitted, as long as the effects of the dividing resistors is negligible or within a degree adjustable by the CR network.

Although it is indicated in the above description relating to embodiments of the invention that the capacitance values of the capacitors $C_1$ to $C_3$ are chosen essentially equal, the capacitance values may be different from each other as long as the effects of the different capacitances is negligible or within a degree adjustable by the CR network.

Although it is indicated in the above description relating to embodiments of the invention that the sum of the resistance values of the capacitors $R_1$ and $R_2$ is chosen essentially one-sixth of the resistance values of the resistor $R_3$, the resistance values may be deviated from this condition as long as the effect is negligible or within a degree adjustable by the network.

Although reference is made above to the use of embodiments of the invention in relation to magnetic disk drive apparatus, this use is merely representative or exemplary. Embodiments of the invention are applicable to servo positioning apparatus in any other kind of system, such as an optically recording disk apparatus, etc.

In an embodiment of the present invention, a notch filter, used in a servo loop, for dampening a mechanical resonance of moving parts of the mechanism to be servo controlled, is composed of a serial T-type filter, that is a CR network including a serial connection of first to third capacitors connected between an input terminal of the filter and an output terminal of the CR network; a first resistor connected between a return terminal of the CR network and an interconnection of the first and second capacitors; a second resistor connected between the return terminal and an interconnection of the second and third capacitors; and a third resistor connected in parallel to the three serial capacitors. The notch frequency is adjusted by varying the resistance values of the first and second resistors. The first and second resistors may be composed of fixed resistors and/or potentiometer-type variable resistors. An output from the CR network may be divided to be fed back to the return terminal. Isolation amplifiers may be added to the output circuit and the feedback circuit to the return terminal. Only the resistor(s) for adjusting the notch frequency may be separately installed in a detachable disk unit including the mechanism to be servo controlled. The notch frequency can be efficiently adjusted by replacing only two fixed resistors or adjusting a variable resistor, and the cost of the disk unit can be reduced.

The present invention provides servo positioning apparatus having a mechanism for positioning an object, for example a magnetic head in a magnetic disk recording system, and a controller for providing a servo signal derived from a position signal representing position of the object, for example relative to a track to be traced on a disk. The controller has a notch filter, the notch frequency of which corresponds to a resonance of the mechanism.

Components of the notch filter network, for example resistors, which can be exchanged or varied, to alter the notch frequency, are separately installed from other components, so that they may be more easily accessed or exchanged, without need to access or exchange the other components.

For example, the notch filter has a bridged serial T configuration with a series connection of capacitors, for example three capacitors, with a parallel-connected resistor, and with further resistors connected respectively to interconnection points between successive capacitors of the series.

Notch frequency can be altered by exchanging or varying these further resistors, which are thus the components to be separately mounted.

## Claims

1. Servo positioning apparatus, comprising:-
a mechanism (6; 14) for positioning an object (13), the mechanism having a resonant frequency; and
a controller (CT; 2, 3, 4, 5) for providing a servo signal ($\Delta V$, $\Delta P$) derived from a position signal (PS) representing position of the object (13), for example relative to a track to be traced by the object, said controller including a notch filter (32'; 32") having a notch frequency substantially equal to said resonant frequency;
characterised in that:-
said notch filter (32'; 32") comprises a network composed of the following elements:-
first to third capacitors ($C_1$, $C_2$, $C_3$) connected in a series circuit bridging an input terminal ($t_1$) of said network and an output terminal ($t_2$) of said network;
a first resistor ($R_1$; $R_1'$, $R_1''$; $R_1'$, $R_6'$, $R_7'$; $R_1'$, $R_8$) connected between a third terminal ($t_3$; A, B, C; $\ell$) of said network and an interconnection point of said first ($C_1$) and second ($C_2$) capacitors;
a second resistor ($R_2$; $R_2'$, $R_2''$; $R_2'$, $R_7'$; $R_2'$, $R_8$) connected between said third terminal ($t_3$; A, B, C; $\ell$) and an interconnection point of said second ($C_2$) and third ($C_3$) capacitors; and
a third resistor ($R_3$) connected in parallel to said series circuit of said first to third capacitors ($C_1$, $C_2$, $C_3$).

2. Apparatus according to claim 1, wherein said first to third capacitors ($C_1$, $C_2$, $C_3$) have substantially equal capacitance values.

3. Apparatus according to claim 1 or 2, wherein the sum of the resistance values of said first ($R_1$; $R_1'$, $R_1''$, $R_1'$, $R_8'$, $R_7'$; $R_1'$, $R_8$) and second ($R_2$; $R_2'$, $R_2''$; $R_2'$, $R_8'$, $R_7'$; $R_2'$, $R_8$) resistors is substantially equal to one-sixth of the resistance value of said third resistor ($R_3$).

4. Apparatus according to claim 1, 2 or 3, wherein said third terminal ($t_3$; A, B, C; $\ell$) is effectively grounded.

5. Apparatus according to claim 1, 2 or 3, wherein an output from said filter is fed back (AMP1, $R_4$, AMP2) to said third terminal ($t_3$; A, B, C; $\ell$).

6. Apparatus according to claim 1, 2, 3, 4 or 5, wherein a first amplifier (AMP1) is further provided between said output terminal ($t_2$) of said network and an output terminal of said filter.

7. Apparatus according to claim 6, wherein said first amplifier (AMP1) has substantially unity gain.

8. Apparatus according to claim 5, or claim 6 or 7 when read as appended to claim 5, wherein the feedback to said third terminal ($t_3$; A, B, C; $\ell$) is supplied from an interconnection point of one end of a fourth resistor ($R_4$), another end of which is connected to said output terminal of said filter, and one end of a fifth resistor ($R_8$), another end of which is connected to an effectively ground level.

9. Apparatus according to claim 5 or 8, or claim 6 or 7 when read as appended to claim 5, wherein a second amplifier (AMP2) is further provided for inputting the feedback to said third terminal ($t_3$; A, B, C; $\ell$).

10. Apparatus according to claim 9, wherein said second amplifier (AMP2) has substantially unity gain.

11. Apparatus according to any of claims 1 to 10, wherein said first ($R_1'$, $R_8$) and second ($R_2'$, $R_8$) resistors are composed of a potentiometer-type variable resistor, a variable terminal ($\ell$) of which is said third terminal.

12. Apparatus according to any of claims 1 to 10, wherein said mechanism (6, 14) for positioning the object (13) is installed in a unit (1) detachable from other portions of the apparatus, and wherein an element ($R_1$, $R_2$; $R_1''$, $R_2''$; $R_8$, $R_7'$, SW; $R_8$) for tuning said notch frequency is separately installed in said unit (1).

13. Apparatus according to claim 12, wherein said notch filter (32', 32") is of a bridged serial T-type.

14. Apparatus according to claim 13, wherein
said first resistor ($R_1'$) is connected between a fourth terminal (A; n) of said network and the interconnection point of said first ($C_1$) and second ($C_2$) capacitors;
said second resistor ($R_2'$) is connected between a fifth terminal (C; m) of said network and the interconnection point of said second ($C_2$) and third ($C_3$) capacitors;
two further resistors ($R_1''$, $R_2''$; $R_6'$, $R_7'$; $R_8$) are serially connected between said fourth (A; n) and fifth (C; m) terminals;
an output signal from said output terminal being fed back to said third terminal ($t_3$; B; $\ell$) which is at the interconnection point of said two further resistors ($R_1''$, $R_2''$; $R_8$, $R_7'$; $R_8$); and
said two further resistors ($R_1''$, $R_2''$; $R_6'$, $R_7'$; $R_8$) are installed in said detachable unit.

15. Apparatus according to claim 14, wherein said two further resistors are composed of a potentiometer-type variable resistor ($R_8$), the variable terminal ($\ell$) of which provides said third terminal.

16. Servo positioning apparatus, comprising:-
a mechanism (6, 14) for positioning an object (10), said mechanism being installed in a disk unit (1), said mechanism having a resonant frequency; and
a controller for providing a servo signal ($\Delta V$, $\Delta P$) derived from a position signal (PS) representing position of the object relative to a track to be traced by the object (10), said controller including a bridged serial T-type notch filter (32'; 32") having a notch frequency substantially equal to said resonant frequency;
characterised in that:-
said filter comprises a network composed of:-
a serial circuit of first to third capacitors ($C_1$, $C_2$, $C_3$) connecting an input terminal ($t_1$) of said network and an output terminal ($t_2$) of said network;
a first resistor ($R_3$) connected in parallel to said serial circuit of said first to third capacitors ($C_1$, $C_2$, $C_3$); and
second ($R_1'$) and third ($R_1''$; $R_8$) resistors serially connected between a third terminal ($t_3$; $\ell$) of said network and an interconnection point of said first ($C_1$) and second ($C_2$) capacitors, an end of said third resistor ($R_2''$; $R_8$) being connected to said third terminal; and
fourth ($R_2'$) and fifth ($R_2''$; $R_8$) resistors serially connected between said third terminal ($t_3$; $\ell$) and an interconnection point of said second ($C_2$) and third ($C_3$) capacitors, an end of said fifth resistor ($R_2''$; $R_8$) being connected to said third terminal ($t_3$; $\ell$), said third ($R_1''$; $R_8$) and fifth ($R_2''$; $R_8$) resistor being separately installed in said disk unit.

17. Apparatus according to claim 16, wherein an output of said network ($t_2$) is fed back to said third terminal ($t_3$; $\ell$).

18. Apparatus according to claim 16 or 17, wherein a first amplifier (AMP1) is further provided between said output terminal ($t_2$) of said network and an output terminal of said filter.

19. Apparatus according to claim 18, wherein said first amplifier (AMP1) has substantially unity gain.

20. Apparatus according to claim 17, or claim 18 or 19 when read as appended to claim 17, wherein the feedback to said third terminal ($t_3$; $\ell$) is supplied from an interconnection point of one end of a sixth resistor ($R_4$), another end of which is connected to said output terminal cf said filter, and one end of a seventh resistor ($R_5$), another end of which is connected to an effectively ground level.

21. Apparatus according to claim 17 or 20, or claim 18 or 19 when read as appended to claim 17, wherein a second amplifier (AMP2) is further provided for inputting the feedback to said third terminal ($t_3$; $\ell$).

22. Apparatus according to claim 21, wherein said second amplifier (AMP2) has substantially unity gain.

23. Apparatus according to any of claims 16 to 22, wherein said third and fifth resistors are composed of a potentiometer-type variable resistor ($R_8$), a variable terminal of which provides said third terminal ($\ell$).

24. Apparatus according to any of claims 16 to 23, wherein said disk unit (1) is detachable from portions of the apparatus other than said disk unit.

25. Apparatus according to any of claims 16 to 24, wherein said controller further comprises:-
a phase compensation circuit (34) for adjusting phase characteristics of the servo loop.


**Patentansprüche**

1. Servopositionierungsvorrichtung, mit:
einem Mechanismus (6; 14) zum Positionieren eines Objekts (13), wobei der Mechanismus eine Resonanzfrequenz aufweist; und
einem Kontroller (CT; 2, 3, 4, 5) zum Vorsehen eines Servosignals ($\Delta V$, $\Delta P$), welches von einem Positionssignal (PS) abgeleitet ist, das eine Position des Objekts (13), beispielsweise relativ zu einer vom Objekt zu verfolgenden Spur, repräsentiert, wobei der genannte Kontroller ein Sperrfilter (32′; 32″) mit einer Sperrfrequenz im wesentlichen gleich der genannten Resonanzfrequenz enthält;
dadurch gekennzeichnet, daß:-
das genannte Sperrfilter (32′; 32″) ein Netzwerk umfaßt, das aus den folgenden Elementen besteht:-
einem ersten bis dritten Kondensator ($C_1$, $C_2$, $C_3$), welche in einer Serienschaltung verbunden sind, die einen Eingangsanschluß ($t_1$) des genannten Netzwerks und einen Ausgangsanschluß ($t_2$) des genannten Netzwerks überbrückt;
einem ersten Widerstand ($R_1$; $R_1′$, $R_1″$; $R_1′$, $R_6′$, $R_7′$; $R_1′$, $R_8$), der zwischen einem dritten Anschluß ($t_3$; A, B, C; $\ell$) des genannten Netzwerks und einem Verbindungspunkt des genannten ersten ($C_1$) und zweiten ($C_2$) Kondensators angeschlossen ist;
einem zweiten Widerstand ($R_2$; $R_2′$, $R_2″$; $R_2′$, $R_7′$; $R_2′$, $R_8$), der zwischen dem genannten dritten Anschluß ($t_3$; A, B, C; $\ell$) und einem Verbindungspunkt des genannten zweiten ($C_2$) und dritten ($C_3$) Kondensators angeschlossen ist; und
einem dritten Widerstand ($R_3$), der mit der genannten Serienschaltung des ersten bis dritten Kondensators ($C_1$, $C_2$, $C_3$) parallelgeschaltet ist.

2. Vorrichtung nach Anspruch 1, bei welcher der genannte erste bis dritte Kondensator ($C_1$, $C_2$, $C_3$) im wesentlichen gleiche Kapazitätswerte aufweisen.

3. Vorrichtung nach Anspruch 1 oder 2, bei welcher die Summe der Widerstandswerte des genannten ersten ($R_1$; $R_1′$, $R_1″$; $R_1′$, $R_8′$, $R_7′$; $R_1′$, $R_8$) und zweiten ($R_2$; $R_2′$, $R_2″$; $R_2′$, $R_8′$, $R_7′$; $R_2′$, $R_8$) Widerstands im wesentlichen gleich einem Sechstel des Widerstandswerts des genannten dritten Widerstands ($R_3$) ist.

4. Vorrichtung nach Anspruch 1, 2 oder 3, bei welcher der genannte dritte Anschluß ($t_3$; A, B, C; $\ell$) effektiv geerdet ist.

5. Vorrichtung nach Anspruch 1, 2 oder 3, bei welcher ein Ausgang aus dem genannten Filter rückgekoppelt ist (AMP1, $R_4$, AMP2) zum genannten dritten Anschluß ($t_3$; A, B, C; $\ell$).

6. Vorrichtung nach Anspruch 1, 2, 3, 4 oder 5, bei welcher ferner ein erster Verstärker (AMP1) zwischen dem genannten Ausgangsanschluß ($t_2$) des genannten Netzwerks und einem Ausgangsanschluß des genannten Filters vorgesehen ist.

7. Vorrichtung nach Anspruch 6, bei welcher der genannte erste Verstärker (AMP1) im wesentlichen eine Eins-Verstärkung aufweist.

8. Vorrichtung nach Anspruch 5, oder Anspruch 6 oder 7, wenn auf Anspruch 5 rückbezogen, bei welcher die Rückkopplung zum genannten dritten Anschluß ($t_3$; A, B, C; $\ell$) zugeführt wird von einem Verbindungspunkt eines Endes eines vierten Widerstands ($R_4$), von dem ein anderes Ende mit dem genannten Ausgangsanschluß des genannten Filters verbunden ist, und eines Endes eines fünften Widerstands ($R_8$), von dem ein anderes Ende mit einem effektiv geerdeten Pegel verbunden ist.

9. Vorrichtung nach Anspruch 5 oder 8, oder Anspruch 6 oder 7, wenn auf Anspruch 5 rückbezogen, bei welcher ferner ein zweiter Verstärker (AMP2) zum Eingeben der Rückkopplung zum genannten dritten Anschluß ($t_3$; A, B, C; $\ell$) vorgesehen ist.

10. Vorrichtung nach Anspruch 9, bei welcher der genannte zweite Verstärker (AMP2) im wesentlichen eine Eins-Verstärkung aufweist.

11. Vorrichtung nach einem der Ansprüche 1 bis 10, bei welcher der genannte erste ($R_1'$, $R_8$) und zweite ($R_2'$, $R_8$) Widerstand aus einem variablen Widerstand vom Potentiometer-Typ bestehen, von dem ein variabler Anschluß ($\ell$) der genannte dritte Anschluß ist.

12. Vorrichtung nach einem der Ansprüche 1 bis 10, bei welcher der genannte Mechanismus (6, 14) zum Positionieren des Objekts (13) in einer Einheit (1) installiert ist, die von anderen Teilen der Vorrichtung abgenommen werden kann, und bei welcher ein Element ($R_1$, $R_2$; $R_1''$, $R_2''$; $R_6'$, $R_7'$, SW; $R_8$) zum Abgleichen der genannten Sperrfrequenz getrennt in der genannten Einheit (1) installiert ist.

13. Vorrichtung nach Anspruch 12, bei welcher das genannte Sperrfilter (32', 32'') von einem überbrückten seriellen T-Typ ist.

14. Vorrichtung nach Anspruch 13, bei welcher
    der genannte erste Widerstand ($R_1'$) zwischen einem vierten Anschluß (A; n) des genannten Netzwerks und dem Verbindungspunkt des genannten ersten ($C_1$) und zweiten ($C_2$) Kondensators angeschlossen ist;
    der genannte zweite Widerstand ($R_2'$) zwischen einem fünften Anschluß (C; m) des genannten Netzwerks und dem Verbindungspunkt des genannten zweiten ($C_2$) und dritten ($C_3$) Kondensators angeschlossen ist;
    zwei weitere Widerstände ($R_1''$, $R_2''$; $R_6'$, $R_7'$; $R_8$) zwischen dem genannten vierten (A; n) und fünften (C; m) Anschluß in Serie geschaltet sind;
    wobei ein Ausgangssignal vom genannten Ausgangsanschluß zum genannten dritten Anschluß ($t_3$; B; $\ell$) rückgekoppelt wird, der sich am Verbindungspunkt der genannten beiden weiteren Widerstände ($R_1''$, $R_2''$; $R_6'$, $R_7'$; $R_8$) befindet; und
    die genannten beiden weiteren Widerstände ($R_1''$, $R_2''$; $R_6'$, $R_7'$; $R_8$) in der genannten abnehmbaren Einheit installiert sind.

15. Vorrichtung nach Anspruch 14, bei welcher die genannten beiden weiteren Widerstände aus einem variablen Widerstand ($R_8$) vom Potentiometer-Typ bestehen, dessen variabler Anschluß ($\ell$) den genannten dritten Anschluß vorsieht.

16. Servopositionierungsvorrichtung, mit:
    einem Mechanismus (6; 14) zum Positionieren eines Objekts (10), wobei der genannte Mechanismus in einer Platteneinheit (1) installiert ist, und der genannte Mechanismus eine Resonanzfrequenz aufweist; und
    einem Kontroller zum Vorsehen eines Ser-

vosignals ($\Delta V$, $\Delta P$), welches von einem Positionssignal (PS) abgeleitet ist, das eine Position des Objekts relativ zu einer vom Objekt (10) zu verfolgenden Spur repräsentiert, wobei der genannte Kontroller ein Sperrfilter (32'; 32'') vom überbrückten seriellen T-Typ mit einer Sperrfrequenz im wesentlichen gleich der genannten Resonanzfrequenz enthält;
    dadurch gekennzeichnet, daß:-
    das genannte Filter ein Netzwerk umfaßt, bestehend aus:-
    einer Serienschaltung eines ersten bis dritten Kondensators ($C_1$, $C_2$, $C_3$), die einen Eingangsanschluß ($t_1$) des genannten Netzwerks und einen Ausgangsanschluß ($t_2$) des genannten Netzwerks verbindet;
    einem ersten Widerstand ($R_3$), der mit der genannten Serienschaltung des genannten ersten bis dritten Kondensators ($C_1$, $C_2$, $C_3$) parallelgeschaltet ist; und
    einem zweiten ($R_1'$) und dritten ($R_1''$; $R_8$) Widerstand, die zwischen einem dritten Anschluß ($t_3$; $\ell$) des genannten Netzwerks und einem Verbindungspunkt des genannten ersten ($C_1$) und zweiten ($C_2$) Kondensators in Serie geschaltet sind, wobei ein Ende des genannten dritten Widerstands ($R_1''$; $R_8$) mit dem genannten dritten Anschluß verbunden ist; und einem vierten ($R_2'$) und fünften ($R_2''$; $R_8$) Widerstand, die zwischen dem genannten dritten Anschluß ($t_3$; $\ell$) und
    einem Verbindungspunkt des genannten zweiten ($C_2$) und dritten ($C_3$) Kondensators in Serie geschaltet sind, wobei ein Ende des genannten fünften ($R_2''$; $R_8$) Widerstands mit dem genannten dritten Anschluß ($t_3$; $\ell$) verbunden ist, und der genannte dritte ($R_1''$; $R_8$) und fünfte ($R_2''$; $R_8$) Widerstand getrennt in der genannten Platteneinheit installiert sind.

17. Vorrichtung nach Anspruch 16, bei welcher ein Ausgang ($t_2$) des genannten Netzwerks zum genannten dritten Anschluß ($t_3$; $\ell$) rückgekoppelt wird.

18. Vorrichtung nach Anspruch 16 oder 17, bei welcher ferner ein erster Verstärker (AMP1) zwischen dem genannten Ausgangsanschluß ($t_2$) des genannten Netzwerks und einem Ausgangsanschluß des genannten Filters vorgesehen ist.

19. Vorrichtung nach Anspruch 18, bei welcher der genannte erste Verstärker (AMP1) im wesentlichen eine Eins-Verstärkung aufweist.

20. Vorrichtung nach Anspruch 17, oder Anspruch 18 oder 19, wenn auf Anspruch 17 rückbezogen, bei welcher die Rückkopplung zum genannten dritten Anschluß ($t_3$; $\ell$) zugeführt wird von einem Verbindungspunkt eines Endes eines sechsten Widerstands ($R_4$), von dem ein anderes Ende mit dem genannten Ausgangsanschluß des genannten Filters verbunden ist, und eines Endes eines siebenten Widerstands ($R_5$), von dem ein anderes Ende mit einem effektiv geerdeten Pegel verbunden ist.

21. Vorrichtung nach Anspruch 17 oder 20, oder Anspruch 18 oder 19, wenn auf Anspruch 17 rückbezogen, bei welcher ferner ein zweiter Verstärker (AMP2) zum Eingeben der Rückkopplung in den genannten dritten Anschluß ($t_3$; $\ell$) vorgesehen ist.

22. Vorrichtung nach Anspruch 21, bei welcher der genannte zweite Verstärker (AMP2) im wesentlichen eine Eins-Verstärkung aufweist.

23. Vorrichtung nach einem der Ansprüche 16 bis 22, bei welcher der genannte dritte und fünfte Widerstand aus einem variablen Widerstand ($R_8$) vom Potentiometer-Typ bestehen, von dem ein variabler Anschluß den genannten dritten Anschluß ($\ell$) vorsieht.

24. Vorrichtung nach einem der Ansprüche 16 bis 23, bei welcher die genannte Platteneinheit (1) von anderen Teilen der Vorrichtung als der genannten Platteneinheit abnehmbar ist.

25. Vorrichtung nach einem der Ansprüche 16 bis 24, bei welcher der genannte Kontroller ferner umfaßt:

eine Phasenkompensationsschaltung (34) zum Einstellen von Phasencharakteristiken der Servoschleife.

## Revendications

1. Appareil d'asservissement de position comprenant :

un mécanisme (6 ; 14) permettant de positionner un objet (13), le mécanisme présentant une fréquence de résonance ; et

un contrôleur (CT ; 2, 3, 4, 5) permettant de générer un signal d'asservissement ($\Delta V$, $\Delta P$) dérivé d'un signal de position (PS) représentant une position de l'objet (13), par exemple par rapport à une piste devant être suivie par l'objet, ledit contrôleur incluant un filtre coupe-bande à bande étroite (32′, 32″) présentant une fréquence éliminée sensiblement égale à ladite fréquence de résonance ;

caractérisé en ce que :

ledit filtre coupe-bande à bande étroite (32′ ; 32″) comprend un réseau composé des éléments suivants :

des premier à troisième condensateurs ($C_1$, $C_2$, $C_3$) connectés selon un circuit série reliant une borne d'entrée ($t_1$) dudit réseau et uné borne de sortie ($t_2$) dudit réseau ;

une première résistance ($R_1$ ; $R_1'$, $R_1''$ ; $R_1'$, $R_5'$, $R_7'$ ; $R_1'$, $R_5$) connectée entre une troisième borne ($t_3$ ; A, B, C ; I) dudit réseau et un point d'interconnexion desdits premier ($C_1$) et second ($C_2$) condensateurs ;

une seconde résistance ($R_2$ ; $R_2'$, $R_2''$ ; $R_2'$, $R_7'$ ; $R_2'$, $R_5$) connectée entre ladite troisième borne ($t_3$ ; A, B, C ; I) et un point d'interconnexion desdits second ($C2$) et troisième ($C3$) condensateurs ; et

une troisième résistance ($R_3$) connectée en parallèle audit circuit série desdits premier à troisième condensateurs ($C_1$, $C_2$, $C_3$).

2. Appareil selon la revendication 1, dans lequel lesdits premier à troisième condensateurs ($C_1$, $C_2$, $C_3$) présentent sensiblement des valeurs de capacité égales.

3. Appareil selon la revendication 1 ou 2, dans lequel la somme des valeurs de résistance desdites première ($R_1$ ; $R_1'$, $R_1''$ ; $R_1'$, $R_6'$, $R_7'$ ; $R_1'$, $R_8$) et seconde ($R_2$ ; $R_2'$, $R_2''$ ; $R_2'$, $R_5'$, $R_7'$ ; $R_2'$, $R_8$) résistances est sensiblement égale à un sixième de la valeur de résistance de ladite troisième résistance ($R_3$).

4. Appareil selon la revendication 1, 2 ou 3, dans lequel ladite troisième borne ($t_3$ ; A, B, C ; I) est efficacement mise à la masse.

5. Appareil selon la revendication 1, 2 ou 3, dans lequel une sortie dudit filtre est appliquée en retour (AMP1, $R_4$, AMP2) à ladite troisième borne ($t_3$ ; A, B, C ; I).

6. Appareil selon la revendication 1, 2, 3, 4 ou 5, dans lequel un premier amplificateur (AMP1) est prévu en outre entre ladite borne de sortie ($t_2$) dudit réseau et une borne de sortie dudit filtre.

7. Appareil selon la revendication 6, dans lequel ledit premier amplificateur (AMP1) présente un gain sensiblement unitaire.

8. Appareil selon la revendication 5, ou la revendication 6 ou 7 lorsqu'elles dépendent de la revendication 5, dans lequel le retour sur ladite troisième borne ($t_3$ ; A, B, C ; I) est appliqué depuis un point d'interconnexion d'une extrémité d'une quatrième résistance ($R_4$), une autre extrémité de celle-ci étant connectée à ladite borne de sortie dudit filtre, et d'une extrémité d'une cinquième

résistance (R$_5$), une autre extrémité de celle-ci étant connectée à un niveau de masse efficace.

9.  Appareil selon la revendication 5 ou 8, ou la revendication 6 ou 7 lorsqu'elle dépend de la revendication 5, dans lequel un second amplificateur (AMP2) est en outre prévu afin de mettre en entrée le retour sur ladite troisième borne (t$_3$ ; A, B, C ; I).

10. Appareil selon la revendication 9, dans lequel ledit second amplificateur (AMP2) présente un gain sensiblement unitaire.

11. Appareil selon l'une quelconque des revendications 1 à 10, dans lequel lesdites première (R$_1$', R$_8$) et seconde (R$_2$', R$_5$) résistances sont composées d'une résistance variable du type potentiomètre dont une borne variable (I) est ladite troisième borne.

12. Appareil selon l'une quelconque des revendications 1 à 10, dans lequel ledit mécanisme (6, 14) permettant de positionner l'objet (13) est installé dans une unité (1) séparable des autres parties de l'appareil, et dans lequel un élément (R$_1$, R$_2$ ; R$_1$", R$_2$" ; R$_5$', R$_7$', SW ; R$_8$) permettant d'accorder ladite fréquence éliminée est installé séparément dans ladite unité (1).

13. Appareil selon la revendication 12, dans lequel ledit filtre coupe-bande à bande étroite (32', 32") est du type T en série ponté.

14. Appareil selon la revendication 13, dans lequel :
    ladite première résistance (R$_1$') est connectée entre une quatrième borne (A ; n) dudit réseau et le point d'interconnexion desdits premier (C$_1$) et second (C$_2$) condensateurs ;
    ladite seconde résistance (R$_2$') est connectée entre une cinquième borne (C ; m) dudit réseau et le point d'interconnexion desdits second (C$_2$) et troisième (C$_3$) condensateurs ;
    deux résistances supplémentaires (R$_1$", R$_2$" ; R$_6$', R$_7$' ; R$_8$) sont connectées en série entre lesdites quatrième (A ; n) et cinquième (C ; m) bornes ;
    un signal de sortie provenant de ladite borne de sortie est appliqué en retour à ladite troisième borne (t$_3$ ; B ; I) qui est située au niveau du point d'interconnexion desdites deux résistances supplémentaires (R$_1$", R$_2$" ; R$_6$', R$_7$' ; R$_8$) ; et
    lesdites deux résistances supplémentaires (R$_1$", R$_2$", R$_5$', R$_7$' ; R$_5$) sont installées dans ladite unité séparable.

15. Appareil selon la revendication 14, dans lequel lesdites deux résistances supplémentaires sont composées d'une résistance variable du type potentiomètre (R$_5$), la borne variable (I) de celle-ci constituant ladite troisième borne.

16. Appareil d'asservissement de position comprenant :
    un mécanisme (6, 14) permettant de positionner un objet (10), ledit mécanisme étant installé dans une unité de disque (1), ledit mécanisme présentant une fréquence de résonance ; et
    un contrôleur permettant de générer un signal d'asservissement ($\Delta$V, $\Delta$P) dérivé d'un signal de position (PS) représentant la position de l'objet par rapport à une trajectoire devant être suivie par l'objet (10), ledit contrôleur incluant un filtre coupe-bande à bande étroite de type T en série ponté (32' ; 32") présentant une fréquence éliminée sensiblement égale à ladite fréquence de résonance ;
    caractérisé en ce que :
    ledit filtre comprend un réseau composé de :
    un circuit série composé de premier à troisième condensateurs (C$_1$, C$_2$, C$_3$) connectant une borne d'entrée (t$_1$) dudit réseau et une borne de sortie (t$_2$) dudit réseau ;
    une première résistance (R$_3$) connectée en parallèle audit circuit série composé desdits premier à troisième condensateurs (C$_1$, C$_2$, C$_3$) ; et
    des seconde (R$_1$') et troisième (R$_1$" ; R$_8$) résistances connectées en série entre une troisième borne (t$_3$ ; I) dudit réseau et un point d'interconnexion desdits premier (C$_1$) et second (C$_2$) condensateurs, une extrémité de ladite troisième résistance (R$_2$" ; R$_5$) étant connectée à ladite troisième borne ; et
    des quatrième (R$_2$') et cinquième (R$_2$" ; R$_8$) résistances connectées en série entre ladite troisième borne (t$_3$ ; I) et un point d'interconnexion desdits second (C$_2$) et troisième (C$_3$) condensateurs, une extrémité de ladite cinquième résistance (R$_2$" ; R$_8$) étant connectée à ladite troisième borne (t$_3$ ; I), lesdites troisième (R$_1$" ; R$_8$) et cinquième (R$_2$" ; R$_5$) résistances étant installées séparément dans ladite unité de disque.

17. Appareil selon la revendication 16, dans lequel une sortie dudit réseau (t$_2$) est appliquée en retour à ladite troisième borne (t$_3$ ; I).

18. Appareil selon la revendication 16 ou 17, dans lequel un premier amplificateur (AMP1) est en outre prévu entre ladite borne de sortie (T$_2$) dudit réseau et une borne de sortie dudit filtre.

19. Appareil selon la revendication 18, dans lequel ledit premier amplificateur (AMP1) présente un gain sensiblement unitaire.

20. Appareil selon la revendication 17, ou selon la revendication 18 ou 19 lorsqu'elles dépendent de la revendication 17, dans lequel le retour à ladite troisième borne ($T_3$ ; I) est généré à partir d'un point d'interconnexion d'une extrémité d'une sixième résistance ($R_4$), une autre extrémité de celle-ci étant connectée à ladite borne de sortie dudit filtre, et d'une extrémité d'une septième résistance ($R_5$), dont une autre extrémité est connectée à un niveau de masse efficace.

21. Appareil selon la revendication 17 ou 20, ou selon la revendication 18 ou 19 lorsqu'elles dépendent de la revendication 17, dans lequel un second amplificateur (AMP2) est en outre prévu pour entrer le retour sur ladite troisième borne ($t_3$ ; I).

22. Appareil selon la revendication 21, dans lequel ledit second amplificateur (AMP2) présente un gain sensiblement unitaire.

23. Appareil selon l'une quelconque des revendications 16 à 22, dans lequel lesdites troisième et cinquième résistances sont constituées par une résistance variable de type potentiomètre ($R_8$), une borne variable de celle-ci constituant ladite troisième borne (I).

24. Appareil selon l'une quelconque des revendications 16 à 23, dans lequel ladite unité de disque (1) est séparable des parties de l'appareil autres que ladite unité de disque.

25. Appareil selon l'une quelconque des revendications 16 à 24, dans lequel ledit contrôleur comprend en outre :

un circuit de compensation de phase (34) permettant de régler des caractéristiques de phase de la boucle d'asservissement.

## FIG.1

## FIG.2

FIG.3

FIG.4

FIG.5(a)

FIG.5 (b)

FIG.6

FIG.7

FIG.8

FIG. 9 (a)

FIG. 9 (b)

FIG. 10

20

FEEDBACK RATIO: 0.95

FIG.11 (a)

FEEDBACK RATIO: 0

FIG.11 (b)

FIG.12 (a)

FIG.12 (b)

FIG.13

23